# EUROPEAN PATENT APPLICATION

(11) **EP 4 815 466 A1**
(43) Date of publication of application: **30.09.2026**
(21) Application number: 25305424.1
(22) Date of filing: 25.03.2025
(51) Int. Cl.: H04N 21/235, H04N 21/435, H04N 21/84, H04N 21/81

(54) **GAZE ANIMATION BITSTREAM FORMAT FOR MPEG AVATAR REPRESENTATION FORMAT**

(71) Applicant: InterDigital CE Patent Holdings, SAS, 75017 Paris (FR)
(72) Inventor: COVA REGATEIRO, João Pedro, 35220 CHATEAUBOURG (FR); GOSSELIN, Philippe Henri, 35340 LIFFRE (FR); AVRIL, Quentin, 35830 BETTON (FR); LE CLERC, Francois, 35590 L'HERMITAGE (FR)
(74) Representative: Vossius & Partner Patentanwälte Rechtsanwälte mbB

(57) **Abstract**

A system, device and method are disclosed. The method includes obtaining an avatar animation unit (AAU) comprising a header and a payload, the obtained AAU including a gaze animation, determining if a flag indicating a renderer is positive, and rendering the gaze animation based on the determined indicated renderer.

## Description

### BACKGROUND

The current effort in Moving Picture Experts Group (MPEG) provides support to animate avatar representations and stream its animation parameters over the network. Avatar Representation Format (ARF)arrived with rich properties, able to provide the support for realistic renderings, simplistic animations and easy parametrizations that allow users to personalize and animate their characters freely. ARF includes a format created with the intention of providing the first interoperable format capable of representing and efficiently transmitting avatar related properties.

### SUMMARY

A system, device and method are disclosed. The method includes obtaining an avatar animation unit (AAU) comprising a header and a payload, the obtained AAU including a gaze animation, determining if a flag indicating a renderer is positive, and rendering the gaze animation based on the determined indicated renderer. The method may include wherein the determined flag indicates at least one of a "lookAt" gaze animation, a controller gaze animation, gaze keypoint animation and blendshape or joints animation. The method may include wherein if the flag is determined to be positive for the "lookAt" gaze animation, the method further comprising rendering the avatar gaze using a "lookAt" index and direction. The method may include wherein if the flag is determined to be positive for the controller gaze animation, the method further comprising rendering the avatar gaze using a controller content. The method may include wherein if the flag is determined to be positive for the gaze keypoint animation, the method further comprising rendering the avatar gaze using a keypoint content. The method may include wherein if the flag is determined to be positive for the blendshape or joints animation, the method further comprising rendering the avatar gaze using an animation or joint content.

The system and device include one or more processors and at least one memory coupled to said one or more processors. The one or more processors are configured to obtain an avatar animation unit (AAU) comprising a header and a payload, the obtained AAU including a gaze animation, determine if a flag indicating a renderer is positive, and render the gaze animation based on the determined indicated renderer. The one or more processors may be further configured to wherein the determined flag indicates at least one of a "lookAt" gaze animation, a controller gaze animation, gaze keypoint animation and blendshape or joints animation. The one or more processors may be further configured to wherein if the flag is determined to be positive for the "lookAt" gaze animation, the one or more processors are further configured to render the avatar gaze using a "lookAt" index and direction. The one or more processors may be further configured to wherein if the flag is determined to be positive for the controller gaze animation, the one or more processors are further configured to render the avatar gaze using a controller content. The one or more processors may be further configured to wherein if the flag is determined to be positive for the gaze keypoint animation, the one or more processors are further configured to render the avatar gaze using a keypoint content. The one or more processors may be further configured to wherein if the flag is determined to be positive for the blendshape or joints animation, the one or more processors are further configured to render the avatar gaze using an animation or joint content.

A computer program comprising program code instructions for implementing the method is also disclosed. A computer readable storage medium having stored thereon instructions for implementing the method is also disclosed. A signal comprising a bitstream, formed by performing the method is also disclosed.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1 illustrates a binary structure using keyframe and non-keyframe avatar animation units (AAUs);
FIG. 2 illustrates a method for encoding avatar parameters;
FIG. 3 illustrates a method for decoding avatar parameters;
FIG. 4 illustrates a processing model for rendering the avatar with animated gaze using the data provided by the gaze avatar animation unit;
FIG. 5 illustrates a block diagram illustrating an example of an encoding method;
FIG. 6 illustrates a block diagram illustrating an example of a decoding method;
FIG. 7 illustrates an example architecture of a device which may be configured to implement methods according to embodiments of the present principles; and
FIG. 8 illustrates an example of an embodiment of the syntax of a stream when the data are transmitted over a packet-based transmission protocol.

### DETAILED DESCRIPTION

Systems, devices, and methods are described. The systems, devices, and methods relate to the storage, transmission and compression of avatar animation data using the Avatar Representation Format (ARF). The systems, devices, and methods relate to transmitting gaze animation packages related to animation streams.

The current effort in Moving Picture Experts Group (MPEG) provides support to animate avatar representations and stream its animation parameters over the network. ARF arrived with rich properties, able to provide the support for realistic renderings, simplistic animations and easy parametrizations that allow users to personalize and animate their characters freely. ARF includes a format created with the intention of providing the first interoperable format capable of representing and efficiently transmitting avatar related properties.

The systems, devices, and methods relate to gaze unit packages to allow the stream of gaze animation parameters acquired with any capable device or system. The increased demand for video teleconferencing solutions requires efficient solutions for streaming of a diverse range of technologies, and MPEG has yet to provide an efficient solution for the problem for the streaming of avatar animation parameters. The systems, devices, and methods provide examples to permit transmission of gaze packages of animation streams. In particular, the systems, devices, and methods provide examples of mechanisms to animate the gaze of the client/decoder through an animation stream.

The current effort in MPEG for the streaming of avatar animation is limited to animation of volumetric meshes. Volumetric meshes are animated by pre-computing correspondences to a template (shadow mesh) for every single frame of the volumetric sequence. A shadow mesh is a mesh that contains a lower fidelity than the volumetric mesh. The correspondences between the two are performed in such a way that each vertex of the volumetric mesh maps to a polygon of the shadow mesh. The objective of the shadow mesh is to provide additional semantical information to the volumetric mesh, e.g., skeletal structure and lower polygon mesh representation, permitting the transferring of animations of the shadow mesh onto the dependent volumetric mesh.

The correspondences between the volumetric mesh and the shadow mesh are performed in such a way that each vertex of the volumetric mesh maps to a polygon of the shadow mesh. At the application side, the volumetric mesh follows the motion of the shadow mesh as a result of the mapping between the two meshes. This behavior is achieved by defining a correspondence schema. For example, in a gITF file, the correspondence schema may be defined according to the syntax in Table 1.

**Table 1 - Definition of MPEG_mesh_linking extension**

| Name | Type | Description |
|---|---|---|
| correspondence | integer | Provides a reference to the accessor where correspondence information is stored. |
| mesh | integer | Provides a reference to the shadow mesh |
| pose | integer | Provides a reference to the accessor where the transformation information is stored. |
| weights | integer | Provides a reference to the accessor where the animation weights are stored. |

"MPEG_mesh_linking" extension is dependent on circular buffers ("MPEG_buffer_circular") and timed accessors ("MPEG_accessor_timed") to produce timed animations that are dependent on the shadow mesh. The parameters defined in Table 1 have to be transmitted to the decoder. The parameter "Correspondence" provides a reference to the accessor that describes the buffer where the correspondence between a dependent mesh and a shadow mesh is established. The parameter "Mesh" provides a reference to a mesh in the list of meshes that are referred to as "shadow mesh" and to which the correspondences are established. The parameter "Pose" provides a reference to the accessor that describes the buffer, that contains the transformation matrices of all the nodes of the dependent mesh to be re-animated. The parameter "Weights" provides a reference to the accessor that describes the buffer where the morph targets weights of the shadow mesh associated with the dependent mesh is available.

Animating avatar representations and streaming the animation parameters over a network, either for re-enactment or for driving other avatar representations that are supported on other platforms is not straightforward. Current solutions, for example in MPEG, lack the flexibility for such modality and only focuses on a very niche use case of dynamic mesh sequences.

As set forth, avatar representation arrived with rich properties, able to provide realistic renderings, simplistic animations and easy parametrizations that allow users to personalize and animate their characters freely. The properties that are concerned to this invention are animation parameters, such as skeletal joints animations, blendshapes, keypoints, and more sophisticated controller mechanisms. The increased demand for video teleconferencing solutions requires efficient solutions for streaming of a diverse range of technologies, and MPEG has yet to provide an efficient solution for the problem for the streaming of avatar animation parameters.

According to the present principles, systems, devices and methods are provided to map two different avatar representations and to drive the animation of a target avatar over the network based on the animation of a source avatar using a streaming protocol. More precisely, a mechanism for structuring avatar animation information generated by a capturing device in a bitstream format that can be used to store, load, and stream this information to a receiver to animate a corresponding digital representation loaded by the receiver. In another example, a solution is provided to stream correspondence between avatar properties, animation data related to an avatar representation format and quantize and compress the data, this solution allows mapping different avatars representations including their shape, semantics, articulation and animation parameters (e.g., morph targets, blendshapes, landmarks).

An avatar animation bitstream is composed of a sequence of avatar animation units (AAUs), which may also be referred to as NAL units. The general syntax structure for an AAU is shown in Table 1, where the data types used for the definition of different fields in the syntax structures are as follows: uimsbf: unsigned integer with most significant bit first, vic8: variable length character string that contains string data stored as a character array encoded in UTF-8, boolean: a single bit that represents a Boolean value, float32: a 32-bit floating point value represented according to the IEEE 754 specification.

Each avatar animation unit (AAU) contains a header and a payload. An AAU header contains at least a field that indicates the unit type and a field that indicates the AAU payload. The contents of the payload depend on the type of the AAU, where ByteAlignment is a padding with up to seven bits set to 0 for the AAU payload to be byte-aligned.

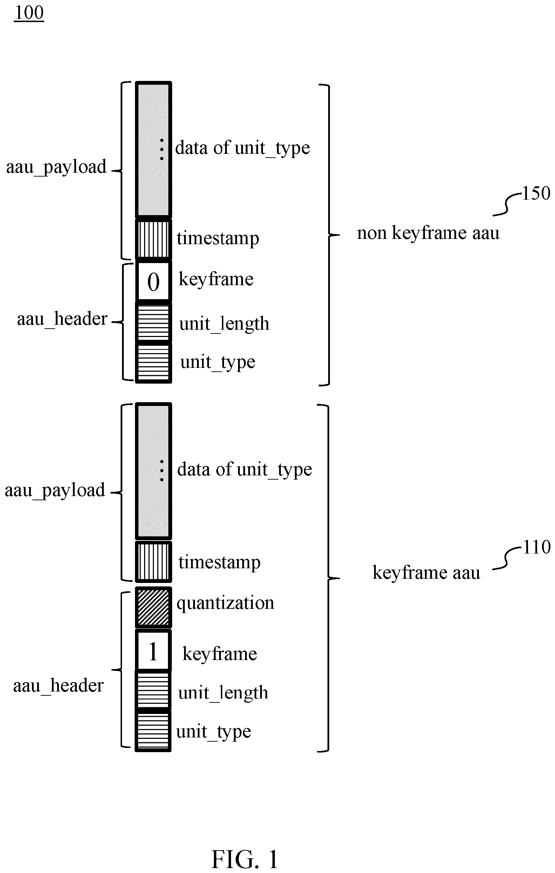

FIG. 1 illustrates a binary structure 100 using keyframe AAUs 110 and non-keyframe AAUs 150. A keyframe AAU 110 represents the main structure of the bitstream format including detailed information about the frame being transmitted, e.g., quantization of the data of unit_type different from configuration type (AAU_CONFIG), and other properties of the payload defined in this document. A non-keyframe AAU 150 includes the same properties of the payload as keyframe AAU 110 with the exception that the data being transmitted is coded (reconstructed respectively) relative to a previous keyframe AAU 110. To this end, the data of non-keyframe AAU 150 is a difference between a current frame and a last keyframe, using the aau_quantization as a precision parameter to encoded (reconstruct respectively) the current frame.

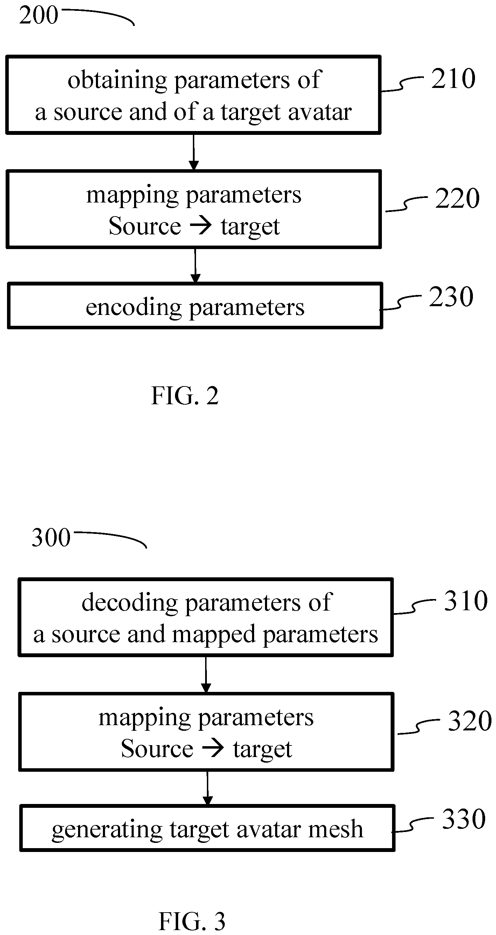

FIG. 2 illustrates a method 200 for encoding avatar parameters. At 210, parameters of a source avatar parameters and parameters of a target avatar are obtained from at least a source. At 220, the parameters of the source avatar are mapped to the parameters of the target avatar. At 230, the mapped parameters and the source avatar parameters are encoded in a data stream.

FIG. 3 illustrates a method 300 for decoding avatar parameters. At 310, parameters of a source avatar and mapped parameters are decoded from a data stream, e.g., the one generated by the encoding method of FIG. 2. At 320, the mapping (e.g., mapped parameters) obtained in a previous packet are used to compute the target avatar parameters (e.g., weights) given the source avatar parameters (e.g., weights). At 330, a target avatar mesh is generated and may be rendered.

The general syntax structure for an AAU is shown the following tables. Each animation unit contains a header and a payload. An AAU header contains at least a field that indicates the unit type. The contents of the payload depend on the type of the unit.

In an example, the framing of the units may be done by signaling the unit (or the unit's payload) length/size in bytes in the AAU header. In an example, the framing of the AAU is done externally through a separate framing mechanism. The syntax of an avatar_animation_unit() is provided in Table 2.

**Table 2 - Syntax of avatar_animation_unit()**

| Syntax | No. of bits | Mnemonic |
|---|---|---|
| avatar_animation_unit() | | |
| { | | |
| aau_header(); | | |
| aau_payload(); | | |
| ByteAlignement | 0-7 | uimsbf |
| } | | |

The syntax structure of the AAU header is as detailed in Table 3.

**Table 3 - Syntax of aau_header()**

| Syntax | No. of bits | Mnemonic |
|---|---|---|
| aau_header() | | |
| { | | |
| aau_unit_type; | 7 | uimsbf |
| aau_unit_length; | 32 | uimsbf |
| aau_keyframe; | 1 | boolean |
| if (aau_keyframe) | | |
| aau_quantization | 16 | uimsbf |
| reserved | 1 | uimsbf |
| } | | |

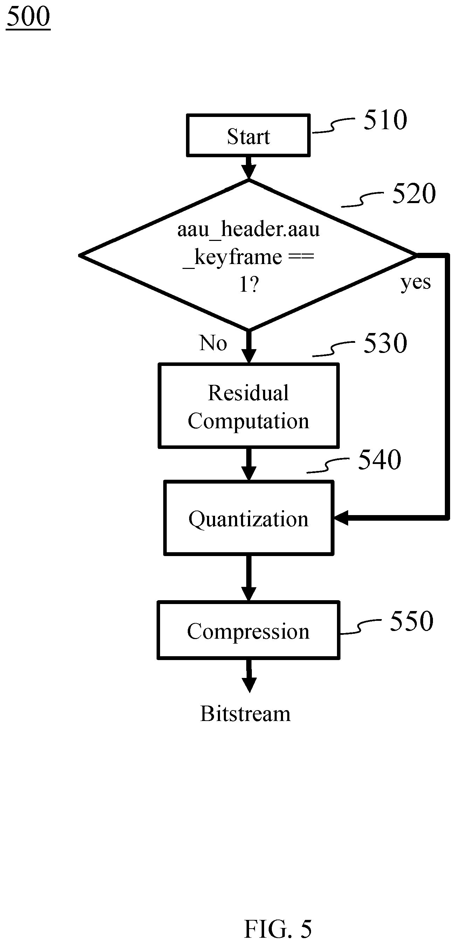

The aau_header() syntax construct may include defined syntax elements. One syntax element is aau_unit_type which indicates the type of the AAU. The possible values are described in the following Table 4 Avatar Animation Unit Type Codes and Corresponding Payloads.. Another syntax element is aau_unit_length which indicates the size of the AAU payload in bytes. Another syntax element is aau_keyframe which indicates whether the AAU payload is a keyframe. Another syntax element is aau_quantization which defines a quantization scale for the carried data. The quantization processing model (a.k.a. encoding method) is described with reference to FIG. 5.

The gaze of a user can be captured using a capture device, which can be one of two types available types, such as dedicated and generic/semantic, for example. The first type of capture devices, e.g., dedicated devices, is designed to directly provide animation parameters dedicated to a specific avatar representation. For example, if the avatar representation is a three-dimensional (3D) rig, the animation parameters are generally blendshapes (or morph targets) and joint transforms. This solution works for a specific dedicated or eventually compatible avatar representation, but it does not work with all other avatar representation that do not follow this specification. In an example, and when possible, blendshape weights and joint transforms can be sent using corresponding animation bitstream format. Using this approach, the application does not know if the avatar gaze is animated or not as blendshapes weights and joint transforms can correspond to any part of the body or even for other use. As a result, the application cannot provide gaze-related features, such as knowing where the user is looking, for example. In an example, the gaze-related blendshape weights and/or joint transforms may be separated.

The second type of capture devices, e.g., generic/sematic devices, are not dedicated to a specific avatar representation. For instance, the second type can be angles or a "look at" point. This second type provides avatar representations supporting such high-level animation parameters that can animate the avatar of the avatar. Furthermore, the second type may bring more features since the gaze is accurately known. In an example, a bit stream format with high level gaze parameters like angles (usually, though controller weights) and coordinates of a "look at" point may be used.

**Table 4 - Avatar Animation Unit type codes and corresponding payloads.**

| auh_unit_type | Name of AAU type | Content of AAU payload |
|---|---|---|
| 0 | AAU_TARGET | aau_config_target() |
| 1 | AAU_CONFIG | aau_config_unit() |
| 2 | AAU_CONTROL | aau_control_unit() |
| 3 | AAU_MORPH | aau_morph_unit() |
| 4 | AAU_JOINT | aau_joint_unit() |
| 5 | AAU_KEYPOINT | aau_keypoint_unit() |
| 6 | AAU_KEYPOINT2D | aau_keypoint2d_unit() |
| 7 | AAU_LANDMARK | aau_landmark_unit() |
| 8 | AAU_GAZE | aau_gaze_unit() |
| 9..20 | AAU_RSV_9.. | Reserved AAU types. |
| | AAU_RSV_20 | |
| 21..31 | AAU_UNSPEC_21.. | Unspecified AAU types. |
| | AAU_UNSPEC_31 | |

The aau_payload() is defined as shown in Table 5.

**Table 5 - Syntax of aau_payload().**

| Syntax | No. of bits | Mnemonic |
|---|---|---|
| aau_payload() | | |
| aau_timestamp; | 32 | uimsbf |
| if (auh_unit_type == AAU_TARGET) | | |
| aau_target_unit() | | |
| else if (auh_unit_type == AAU_CONFIG) | | |
| aau_config_unit() | | |
| else if (auh_unit_type == AAU_CONTROL) | | |
| aau_control_unit() | | |
| else if (auh_unit_type == AAU_MORPH) | | |
| aau_morph_unit() | | |
| else if (auh_unit_type == AAU_JOINT) | | |
| aau_control_unit() | | |
| else if (auh_unit_type == AAU_KEYPOINT) | | |
| aaujoint_unit() | | |
| else if (auh_unit_type == AAU_KEYPOINT2D) | | |
| aau_control_unit() | | |
| else if (auh_unit_type == AAU_LANDMARK) | | |
| aau_landmark_unit() | | |
| else if (auh_unit type == AAU_GAZE) | | |
| aau_gaze_unit() | | |
| } | | |

The aau_payload() syntax construct includes defined syntax elements. For example, aau_timestamp which is the timestamp of the AAU in ticks. The timestamp in seconds can be calculated as timestamp/timescale, where timescale is signaled in the configuration AAU.

A gaze unit is an AAU whose auh_unit_type field is set to AAU_GAZE. The payload of such AAU is defined as shown in Table 6.

**Table 6 - Syntax of aau_silent_unit().**

| Syntax | No. of bits | Mnemonic |
|---|---|---|
| aau_gaze_unit() | | |
| { | | |
| agu_timescale; | 32 | uimsbf |
| agu_animation_flag; | 1 | boolean |
| agu_joint_flag; | 1 | boolean |
| agu_keypoint_flag; | 1 | boolean |
| agu_controller_flag; | 1 | boolean |
| agu_lookat_flag; | 1 | boolean |
| if (agu_animation_flag) { | | |
| agu_animation_target_count_minus1; | 10 | uimsbf |
| agu_animation_set_index; | 10 | uimsbf |
| for (i=1; i<=agu_animation_target_count_minus1 + 1; i++) { | | |
| agu_animation_target_index[i]; | agu_animation_precision*8 | uimsbf |
| agu_animation_target_weight[i]; | 32 | float |
| } | | |
| } | | |
| if (agu_joint_flag) { | | |
| agu_joint_count_minus1; | 10 | uimsbf |
| agu_joint_set_index; | 10 | uimsbf |
| for (i=1; i<=agu_joint_count_minus1 + 1; i++) { | | |
| agu_target_joint_index[i]; | 10 | uimsbf |
| agu_joint_transform[i]; | 16 * 32 | float |
| } | | |
| } | | |
| if (agu_keypoint_flag) { | | |
| agu_keypoint_count_minus1; | 16 | uimsbf |
| agu_keypoint_set_index; | 10 | uimsbf |
| for (i=1; i<=agu_keypoint_count_minus1 + 1; i++) { | | |
| agu_target_keypoint_index[i]; | 16 | uimsbf |
| agu_keypoint_transform[i]; | 16 * 32 | float |
| } | | |
| } | | |
| if (agu_controller_flag) { | | |
| agu_controller_count_minus1; | 16 | uimsbf |
| agu_controller_set_index; | 10 | uimsbf |
| for (i=1; i<=agu_keypoint_count_minus1 + 1; i++) { | | |
| agu_target_controller_index[i]; | agu_controller_precision*8 | uimsbf |
| agu_controller_weight[i]; | 32 | float |
| } | | |
| } | | |
| if (agu_lookat_flag) { | | |
| agu_lookat_index; | 10 | uimsbf |
| agu_lookat_direction; | 3*32 | uimsbf |
| } | | |
| } | | |

The aau_gaze_unit() contains two main categories of animation data. Low-level animation data which includes animation weights, such as blendshape or morph targets, for example, joint transforms and keypoint transforms, and high-level animation data which includes controller weights and "look at" point coordinates. The sender has all of this animation data available and may utilize as selected or desired, depending on expected features. This animation data is described below with respect to provided examples.

In an example, the source of gaze (like a capture device) is dedicated to the avatar representation of the receiver. This representation is a 3D rig which only uses blendshape weights including where the sender only sends blendshape weights, such as agu_animation_XXX variables, for example).

In an example, the source of gaze (like a capture device) is dedicated to the avatar representation of the receiver. This representation is a 3D rig which only uses joint transforms including where the sender only sends joint transforms, such as agu_joints_XXX variables, for example.

In an example, the source of gaze (like a capture device) is dedicated to the avatar representation of the receiver. This representation is a 3D rig which only uses keypoint transforms where the sender only sends keypoint transforms, such as agu_keypoint_XXX variables, for example.

In an example, the source of gaze (like a capture device) is dedicated to the avatar representation of the receiver. This representation is a 3D rig which uses blendshape weights and joint transforms where the sender sends blendshape weights and joint transforms, such as agu_animation_XXX and agu_joints_XXX variables, for example.

In an example, the source of gaze (like a capture device) is not dedicated to the avatar representation of the receiver and provides gaze angles where the sender only sends controller weights, each controller corresponding to an angle, such as agu_controller_XXX variables, for example.

In an example, the source of gaze (like a capture device) is not dedicated to the avatar representation of the receiver and provides a "look at" point where the sender only sends the coordinates of the "look at" point, such as agu_lookat_XXX variables, for example.

In an example, the source of gaze (like a capture device) is dedicated to the avatar representation of the receiver except that the sender knows how to compute the gaze angles knowing the gaze-related blendshape weights. The sender sends the blendshape weights and computed controller weights.as agu_animation_XXX and agu_controller_XXX variables, for example.

In an example, the source of gaze (like a capture device) is dedicated to the avatar representation of the receiver except that the sender knows how to compute the gaze angles and a "look at" point knowing the gaze-related blendshape weights and joint transforms. The sender sends blendshape weights, joint transforms, controller weights and the coordinates of a "look at" point, such as weights (e.g., agu_animation_XXX and agu_joint_XXX and agu_controller_XXX and agu_lookat_XXX variables, for example. Many other combinations are possible depending on the capture device and the capabilities of the sender. In all cases, the receiver may be configured that the animation data is related to the avatar gaze.

The aau_gaze_unit() syntax construct includes a plurality of syntax elements. A syntax element includes agu_animation_flag which is a Boolean flag that identifies if the unit contains animation target weights data. A syntax element includes agu_joint_flag which is a Boolean flag that identifies if the unit contains joint transform matrices data. A syntax element includes agu_keypoint_flag which is a Boolean flag that identifies if the unit contains keypoint transform matrices data. A syntax element includes agu_controller_flag which is a Boolean flag that identifies if the unit contains controller weights data. A syntax element includes agu_lookat_flag which is a Boolean flag that identifies if the unit contains lookat direction 3D vector data. A syntax element includes agu_timescale which is a number of ticks per second. The aau_timestamp in seconds becomes aau_timestamplagu_timescale. A syntax element includes agu_animation_target_count_minus1 which in a plus 1 indicates the number of animation targets whose weights are signaled in this gaze AAU. A syntax element includes agu_animation_set_index which is the index of the i-th animation set target. A syntax element includes agu_animation_traget_index[i] which is the index of the i-th animation target whose weight is signaled in the gaze AAU. A syntax element includes agu_animation_target_weight[i] which is the weight of the i-th animation target whose index is signaled by the field agu_animation_target_index[i]. A syntax element includes agu_joint_count_minus1 which in a plus 1 indicate the number of joint transformations signaled in the gaze AAU. A syntax element includes agu_joint_set_index which is the index of the i-th joint set target. A syntax element includes agu_target_joint_index[i] which indicates the target joint index for the i-th joint signaled in the gaze AAU. A syntax element includes agu_joint_transform[i] which is the transformation matrix for the joint whose index is signaled by the field agu_target_joint_index[i]. A syntax element includes agu_keypoint_count_minus1 which in a plus 1 indicates the number of keypoint transformations signaled in the gaze AAU. A syntax element includes agu_keypoint_set_index which is the index of the i-th keypoint set target. A syntax element includes agu_target_keypoint_index[i] which indicates the target keypoint index for the i-th keypoint signaled in the gaze AAU. A syntax element includes agu_keypoint_transform[i] which is the transformation matrix for the target keypoint whose index is signaled by the field agu_target_keypoint_index[i]. A syntax element includes agu_controller_count_minus1 which in a plus 1 indicates the number of controller weights present in the gaze AAU. A syntax element includes agu_controller_set_index which is the index of the i-th controller set target. A syntax element includes agu_target_controller_index[i] which indicates the target controller index for the i-th controller signaled in the gaze AAU. A syntax element includes agu_control_weight[i] which is the weight for the target controller whose index is signaled by the field agu_target_controller_index[i]. A syntax element includes agu_lookat_index which is the index of the vector to with the agu_lookat_direction applies e.g., which eye lookat vector needs to be modified. A syntax element includes agu_lookat_direction which is a 3D directional vector for the target gaze animation.

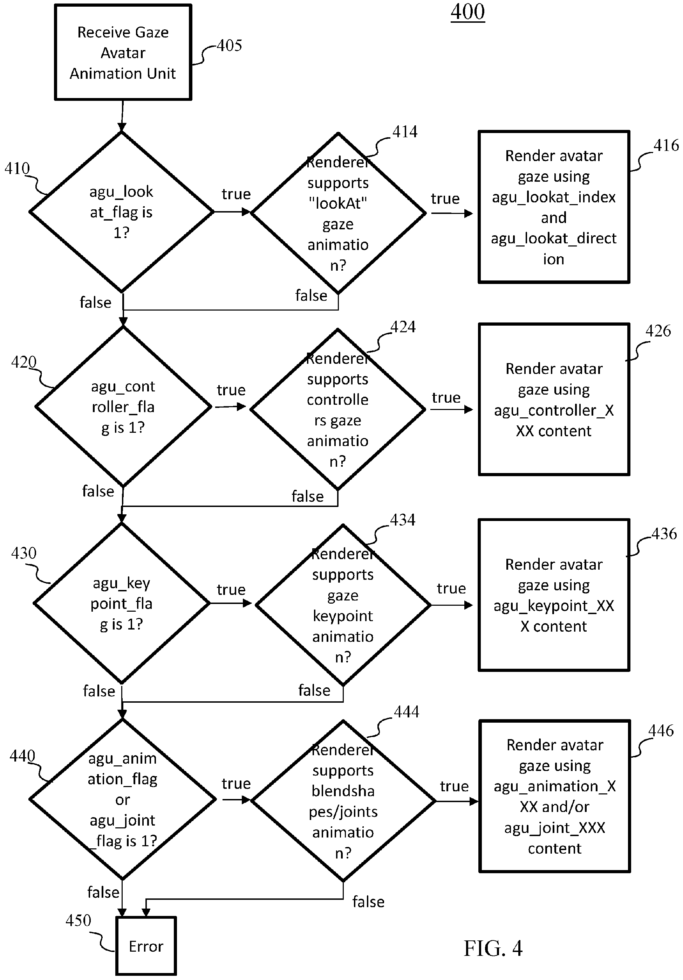

FIG. 4 illustrates a processing model 400 for rendering the avatar with animated gaze using the data provided by the gaze avatar animation unit. Method 400 includes, at 405, receiving a gaze avatar animation unit and the received gaze AAU is successfully parsed.

At 410-416, method 400 includes determining if agu_lookat_flag is 1 (at 410) and if the application rendering engine supports gaze animation using a "look at" position (at 414) then the avatar gaze is rendered using this information (at 416). If agu_lookat_flag is not 1 (at 410) or if the application rendering engine does not support gaze animation using a "look at" position (at 414), method 400 continues to 420.

At 420-426, method 400 includes determining if agu_controller_flag is 1 (at 420) and if the application rendering engine supports gaze animation using controllers (at 424) then the avatar gaze is rendered using this information (at 426). if agu_controller_flag is not 1 (at 420) or if the application rendering engine does not support gaze animation using controllers (at 424), method 400 continues to 430.

At 430-436, method 400 determines if agu_keypoint_flag is 1 (at 430) and if the application rendering engine supports gaze animation using keypoints (at 434) then the avatar gaze is rendered using this information (at 436). If agu_keypoint_flag is not 1 (at 430) or if the application rendering engine does not support gaze animation using keypoints (at 434), method 400 continues to 440.

At 440-446, method 400 includes determining if agu_animation_flag is 1 or agu_joint_flag is 1 (at 440) and if the application rendering engine supports animation using blendshape weights and/or joint transforms (at 444) then the avatar gaze is rendered using this information (at 446). if agu_animation_flag is 1 or agu_joint_flag is not 1 (at 440) or if the application rendering engine does not support animation using blendshape weights and/or joint transforms (at 444), method 400 continues to providing an error at 450.

At 450, method 400 includes providing an error that the unit does not provide any gaze animation data or the application does not support the gaze animation data it contains.

The example of FIG. 4 is provided as an example of one way to use the provided gaze animation data. In the example of FIG. 4, if "look at" position is available, it must be used instead of other gaze animation data. This behavior is not mandatory, and another application may prefer use controllers instead of "look at", for instance.

FIG. 5 illustrates a block diagram illustrating an example of an encoding method 500. Encoding method 500 may also be referred to as a processing model. Encoding method 500 provides an encoding method for the avatar animation unit using quantization and compression. Method 500 uses quantization to code and compress the bitstream format. The quantization flag in one example can be fixed and normative with a defined default value for all the data parameters transmitted in the payload.

In a different embodiment, the quantization flag is transmitted and unique to all data parameters in the payload, which means all data in the payload is quantified to an integer value to the same number of bits e.g., quantization of 10 bits.

In yet another embodiment, the quantization flag is transmitted per keyframe and different for every data parameter transmitted in the payload, making the bitstream size variable depending on the type of data being transmitted in the payload.

FIG. 5 illustrates an encoding method for an example aau_header and aau_payload function (at 510). At 520, the header (aau_header) is checked to determine whether the aau is a keyframe aau or a non keyframe aau.

If the aau is not a keyframe, residual values in the aau_payload are computed (at 530) using EQ. 1. $data ′ = {data}_{prev} - data ,$ where "data" can be represented by any data floating value present in the "aau_payload" with a "aau_type" equals to "AAU_ANIMATION", "AAU_JOINT" or "AAU_LANDMARK" e.g., "amu_animation_target_weights[i]" that represent 32 bits of type float32, but not limited to. The data of the previous frame data_prev is subtracted from the current frame data, which results in applying quantization to the difference between two frames, wherein the previous frame is a keyframe.

If the aau is a keyframe, values are not modified as defined in Eq. 2. $data ′ = data ,$

Then, in all cases, values (residual or absolute) are quantized (at 540) using aau_quantization defined in the aau header and Eq. 3. ${data}_{q} = round \left(\frac{data ′}{1 ≪ QS}\right) ,$

The QS can be defined by any variable integer value e.g., QS = 5, or QS = 10 or any positive number. The resulted data_q in one embodiment is used to define a number of bits for the data that needs to be compressed and transmitted.

A compression mechanism of integers (at 550) is used, this can typically be entropy encoding, but not limited too.

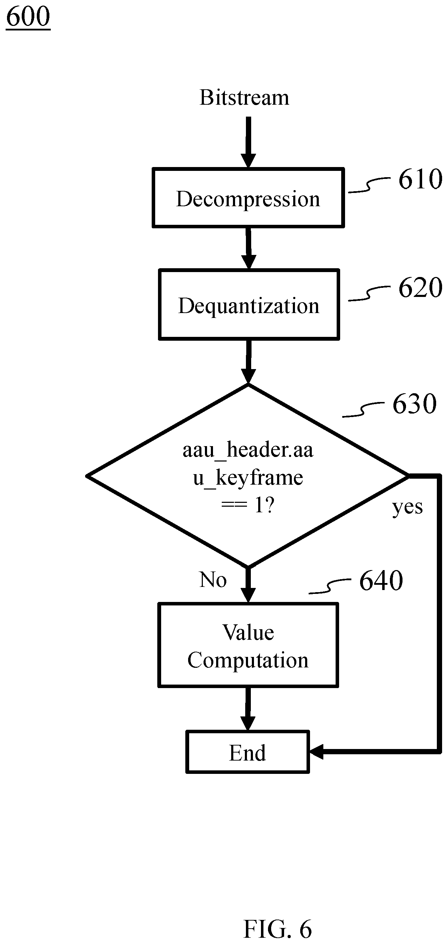

FIG. 6 illustrates a block diagram illustrating an example of a decoding method 600. Decoding method 600 may be a processing model, for example. Decoding method 600 may be for the avatar animation unit reconstruction. A decompression mechanism of integers is used at 610), consistent with the one used in the encoding stage (at 550). This may include using entropy decoding. The result is an aau_header and an aau_payload where floating values are quantized.

The floating values are reconstructed/dequantized (at 620) using the aau_quantization defined in the aau header and Eq. 4. $data ′ = \left(1≪QS\right) {data}_{q} ,$

If the aau is not a keyframe (at 630), absolute values in the aau_payload are computed (at 640) using Eq. 5. $data = {data}_{prev} - data ′ ,$

If the aau is a keyframe, values are not modified as defined in Eq. 6.: $data = data ′ ,$

An avatar may then be rendered once AAUs are reconstructed.

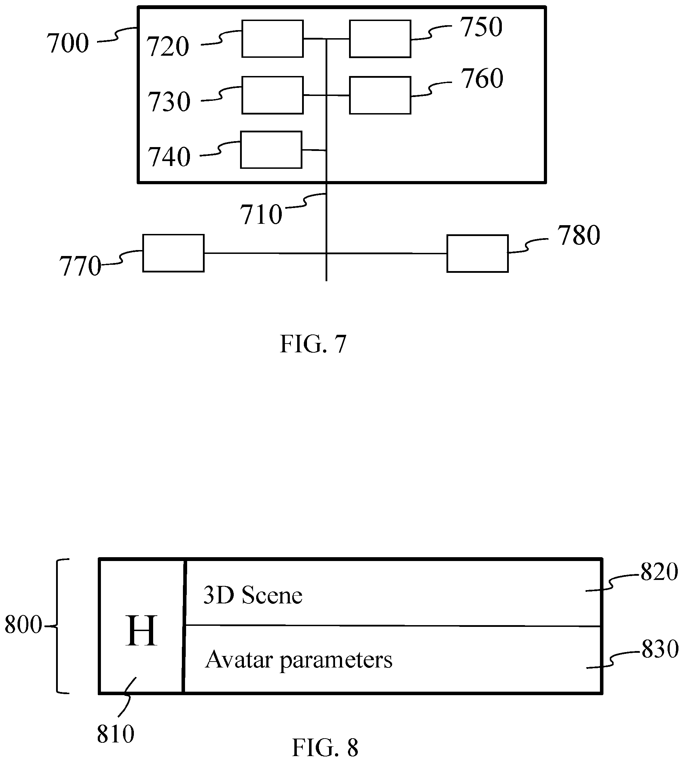

FIG. 7 illustrates an example architecture of a device 700 which may be configured to implement methods according to embodiments of the present principles. The device is linked with other devices via their bus 710 and/or via I/O interface 760. Device 700 may include a processor 720, a Read Only Memory (ROM) 730, a Random Access Memory (RAM) 740, a storage interface 750, an input/output (I/O) interface 760, and a power supply (not shown). Device 700 may include one or more of these elements described and the elements may be communicatively coupled by a data and address bus 710. Processor 720 (or CPU) is included in device 700. Processor may be a Digital Signal Processor (DSP), for example. Input/output (I/O) interface 760 may be for reception of data to transmit, from an application, for example. Power supply may include a battery, for example.

In accordance with an example, power supply is external to the device. For memory 730, 740 the word « register » used in the specification may correspond to area of small capacity (some bits) or to very large area (e.g. a whole program or large amount of received or decoded data). ROM 730 may include at least a program and parameters. ROM 730 may store algorithms and instructions to perform techniques in accordance with present principles. When switched on, CPU 720 may upload the program in RAM 740 and executes the corresponding instructions.

RAM 740 includes, in a register, the program executed by CPU 720 and uploaded after switch-on of device 700, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 700 may be linked, for example, via bus 710 to a set of sensors 770 and to a set of rendering devices 780. Sensors 770 may be, for example, cameras, microphones, temperature sensors, Inertial Measurement Units, GPS, hygrometry sensors, IR or UV light sensors or wind sensors. Rendering devices 780 may be, for example, displays, speakers, vibrators, heat, fan, etc.

In accordance with examples, device 700 may be configured to implement a method according to the present principles of managing a representation of the real environment of a user of an XR application. Device 700 may be a mobile device, a communication device, a game device, a tablet (or tablet computer), a laptop, a still picture camera, and a video camera.

FIG. 8 illustrates an example of an embodiment of the syntax of a stream when the data are transmitted over a packet-based transmission protocol. FIG. 8 illustrates shows an example structure 800 of a stream encoding point clouds according to the present principle. The structure consists in a container which organizes the stream in independent elements of syntax. The structure may comprise a header part 810 which is a set of data common to every syntax element of the stream. For example, the header part comprises some of metadata about syntax elements, describing the nature and the role of each of them. The structure comprises a payload comprising an element of syntax 820 and at least one element of syntax 830 (there may be an element of syntax 800 for each type of attribute data, for instance one for the color, one for the reflectance, one for the normal vectors, etc.). Syntax element 820 comprises data representative of the geometry of the point cloud, that is, for example, a series of bits representative of the 3D blocks, for example represented as a trisoup.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

In the present application, the terms "reconstructed" and "decoded" may be used interchangeably, the terms "encoded" or "coded" may be used interchangeably, the terms "pixel" or "sample" may be used interchangeably, and the terms "image," "picture" and "frame" may be used interchangeably. Usually, but not necessarily, the term "reconstructed" is used at the encoder side while "decoded" is used at the decoder side.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining an avatar animation unit (AAU) comprising a header and a payload, the obtained AAU including a gaze animation;
determining if a flag indicating a renderer is positive; and
rendering the gaze animation based on the determined indicated renderer.

2. The method of claim 1, wherein the determined flag indicates at least one of a "lookAt" gaze animation, a controller gaze animation, gaze keypoint animation and blendshape or joints animation.

3. The method of claim 1 or 2, wherein if the flag is determined to be positive for the "lookAt" gaze animation, the method further comprising rendering the avatar gaze using a "lookAt" index and direction.

4. The method of any one of claims 1 to 3, wherein if the flag is determined to be positive for the controller gaze animation, the method further comprising rendering the avatar gaze using a controller content.

5. The method of any one of claims 1 to 4, wherein if the flag is determined to be positive for the gaze keypoint animation, the method further comprising rendering the avatar gaze using a keypoint content.

6. The method of any one of claims 1 to 5, wherein if the flag is determined to be positive for the blendshape or joints animation, the method further comprising rendering the avatar gaze using an animation or joint content.

7. An apparatus comprising:
one or more processors; and
at least one memory coupled to said one or more processors, wherein said one or more processors are configured to:
obtain an avatar animation unit (AAU) comprising a header and a payload, the obtained AAU including a gaze animation;
determine if a flag indicating a renderer is positive; and
render the gaze animation based on the determined indicated renderer.

8. The apparatus of claim 7, wherein the determined flag indicates at least one of a "lookAt" gaze animation, a controller gaze animation, gaze keypoint animation and blendshape or joints animation.

9. The apparatus of claim 7 or 8, wherein if the flag is determined to be positive for the "lookAt" gaze animation, the one or more processors are further configured to render the avatar gaze using a "lookAt" index and direction.

10. The apparatus of any one of claims 7 to 9, wherein if the flag is determined to be positive for the controller gaze animation, the one or more processors are further configured to render the avatar gaze using a controller content.

11. The apparatus of any one of claims 7 to 10, wherein if the flag is determined to be positive for the gaze keypoint animation, the one or more processors are further configured to render the avatar gaze using a keypoint content.

12. The apparatus of any one of claims 7 to 11, wherein if the flag is determined to be positive for the blendshape or joints animation, the one or more processors are further configured to render the avatar gaze using an animation or joint content.

13. A computer program comprising program code instructions for implementing the method according to any one of claims 1-6 when executed by a processor.

14. A computer readable storage medium having stored thereon instructions for implementing the method of any one of claims 1-6.

15. A signal comprising a bitstream, formed by performing the method of any one of claims 1 to 6.
